# EUROPEAN PATENT APPLICATION

(11) **EP 2 632 083 A1**
(43) Date of publication of application: **28.08.2013**
(21) Application number: 13152713.7
(22) Date of filing: 25.01.2013
(51) Int. Cl.: H04L 12/26

(54) **Intelligent and scalable network monitoring using a hierarchy of devices**

(30) Priority: 21.02.2012 US 201213401395
(71) Applicant: Tektronix, Inc., Beaverton, Oregon 97077-0001 (US)
(72) Inventor: Ratakonda, Balaji, Allen, TX Texas 75013 (US); Curtin, John Peter, Richardson, TX Texas 75081 (US); Ivershen, Aleksey G., Garland, TX Texas 75040 (US); Wilkinson, Robert Todd, Plano, TX Texas 75025 (US)
(74) Representative: Hofstetter, Schurack & Partner

(57) **Abstract**

Systems and methods for intelligent and scalable network monitoring using a hierarchy of devices are described. In some embodiments, a method may include monitoring network traffic having a first data rate and identifying a portion of that traffic. For example, the network traffic may include packet-based traffic in a mobile telecommunications network (e.g., 3G, 4G, LTE, etc.), and identifying the portion of the traffic may include identifying high-value and/or low-value portions as determined by one or more traffic identification rules (e.g., by user, session, transport protocol, type of content, etc.). The method may also include selecting a network analyzer to receive the high (or low) value traffic, and which may not be capable of and/or configured to analyze packets at the first data rate. Accordingly, the method may further include transmitting the identified traffic portion to the selected analyzer with a second data rate smaller than the first data rate.

## Description

### TECHNICAL FIELD

This specification is directed, in general, to network monitoring, and, more particularly, to systems and methods for intelligent and scalable network monitoring using a hierarchy of devices.

### BACKGROUND

Mobile data networks continue to experience an unprecedented explosion in total traffic, particularly as new types of client devices (*e.g.*, web-enabled smart phones, tablet devices, Internet-enabled TVs, gaming consoles, etc.) begin to consume larger amounts of bandwidth. Additionally, data speeds for network traffic can be as high as 100 Gigabit/second (Gb/s). Conventional network monitoring solutions typically have two components. First, one or more entities known as "probes" receive the totality of the network data and perform analysis and/or correlation of that entire data. Second, a server (or a cluster of servers) further aggregates the processed data and presents it to end-users.

As the inventors hereof have recognized, however, conventional monitoring cannot be easily scaled to meet the current traffic expansion. For most entities, analyzing 100% of their network traffic will soon become a cost-prohibitive undertaking. Accordingly, to address these and other issues, the inventors hereof have developed systems and methods for intelligent and scalable network monitoring using a hierarchy of devices.

### SUMMARY

Embodiments of systems and methods for intelligent and scalable network monitoring using a hierarchy of devices are described herein. In an illustrative, non-limiting embodiment, a method may include monitoring network traffic, the network traffic having a first data rate, identifying a portion of the network traffic, selecting one of a plurality of network analyzers, and transmitting the identified portion of network traffic to the selected one of the plurality of network analyzers with a second data rate smaller than the first data rate, where the selected one of the plurality of network analyzers is not capable of (or configured to) analyzing traffic at the first data rate.

In some implementations, monitoring the network traffic includes monitoring packet-based traffic in a mobile telecommunications network (*e.g.*, 3G, 4G, LTE, etc.). Also, identifying the portion of the network traffic includes identifying a high-value traffic portion and a low-value traffic portion as determined by one or more traffic identification rules. For example, the one or more traffic identification rules may identify a user, a user session, a transport protocol, a type of content, etc.

In some embodiments, selecting the one of the plurality of network analyzers includes matching the high-valued traffic portion to a first selected one of the plurality of network analyzers and matching the low-valued traffic portion to a second selected one of the plurality of network analyzers. Moreover, selecting the one of the plurality of network analyzers includes executing a load balancing operation among two or more of the plurality of network analyzers. For example, the method may include receiving load information from two or more of the plurality of network analyzers, the load information indicating at least one of: a central processing unit (CPU) usage or a memory usage, and selecting the one of the plurality of network analyzers to receive the subset of network traffic based, at least in part, upon the load information.

In some cases, the first data rate may be approximately between 2 and 10 times greater than the second data rate. In other cases, the first data rate may be approximately between 10 and 100 times greater than the second data rate.

In another illustrative, non-limiting embodiment, a method may include monitoring network traffic in a telecommunications network, the traffic being communicated between two nodes at a network data rate. The method may also include identifying, among the network traffic, high-value traffic as determined by one or more traffic identification rules and transmitting the high-value traffic to a first of a plurality of network analyzers with a first data rate smaller than the network data rate. The method may further include identifying, among the network traffic, low-value traffic as determined by the one or more traffic identification rules, and transmitting the low-value traffic to a second one of a plurality of network analyzers with a second data rate smaller than the network data rate and different from the first data rate.

In some implementations, the second data rate may be larger than the first data rate. Alternatively, the second data rate may be smaller than the first data rate. The method may also include receiving load information from the first of the plurality of network analyzers and configuring the first data rate based, at least in part, upon the load information. The method may further include receiving load information from the plurality of network analyzers, determining, based on the load information, that the first of the plurality of network analyzers is not capable of processing a portion of the high-value traffic with the first data rate, and selecting, based on the load information, between: (a) transmitting the portion of the high-value traffic to another of the plurality of network analyzers with the first data rate, or (b) transmitting the portion of the high-value traffic to the first of the plurality of network analyzers with a reduced first data rate.

In yet another illustrative, non-limiting embodiment, a method may include monitoring, at a first data rate, packet-based traffic communicated between nodes of a wireless telecommunications network with the first data rate. The method may also include identifying a high-value portion of the packet-based traffic based, at least in part, upon user identification information present in the packet-based traffic. The method may further include transmitting the high-value portion of the packet-based traffic to a first selected one of the plurality of network analyzers with a second data rate smaller than the first data rate, the first selected one of the plurality of network analyzers not configured to operate at the first data rate.

In some implementations, the method may include identifying a low-value portion of the packet-based traffic based, at least in part, upon user identification information present in the packet-based traffic, and transmit the low-value portion of the packet-based traffic to a second selected one of the plurality of network analyzers with a third data rate smaller than the first data rate and different from the second data rate, the second selected one of the plurality of network analyzers not configured to operate at the first data rate. Additionally or alternatively, the method may include determining that the first of the plurality of network analyzers is not capable of processing the high-value portion of the packet-based traffic with the first data rate, transmitting a first part of the high-value portion of the packet-based traffic to a third one of the plurality of network analyzers with a third data rate, and transmitting a second part of the high-value portion of the packet-based traffic to the first of the plurality of network analyzers with a reduced first data rate.

In some embodiments, one or more of the methods described herein may be performed by one or more computer systems (*e.g.*, in the form of a front-end network monitoring probe or the like). In other embodiments, a tangible computer-readable storage medium may have program instructions stored thereon that, upon execution by one or more computer or network monitoring systems, cause the one or more computer systems to perform one or more operations disclosed herein. In yet other embodiments, a system may include at least one processor and a memory coupled to the at least one processor, the memory configured to store program instructions executable by the at least one processor to perform one or more operations disclosed herein.

### BRIEF DESCRIPTION OF THE DRAWINGS

Reference will now be made to the accompanying drawings, where:

FIGURE 1 is a block diagram of a network monitoring environment according to some embodiments.

FIGURE 2 is a block diagram of a hierarchical network monitoring system according to some embodiments.

FIGURE 3 is a block diagram of a front-end monitoring probe according to some embodiments.

FIGURE 4 is a flowchart of a method of routing network traffic according to some embodiments.

FIGURE 5 is a flowchart of a method of routing high-value and low-value network traffic according to some embodiments.

FIGURE 6 is a flowchart of a method of intelligent load balancing according to some embodiments.

FIGURE 7 is a block diagram of a computer system configured to implement various systems and methods described herein according to some embodiments.

While this specification provides several embodiments and illustrative drawings, a person of ordinary skill in the art will recognize that the present specification is not limited only to the embodiments or drawings described. It should be understood that the drawings and detailed description are not intended to limit the specification to the particular form disclosed, but, on the contrary, the intention is to cover all modifications, equivalents and alternatives falling within the spirit and scope of the claims. Also, any headings used herein are for organizational purposes only and are not intended to limit the scope of the description. As used herein, the word "may" is meant to convey a permissive sense (*i.e.,* meaning "having the potential to"), rather than a mandatory sense (*i.e.,* meaning "must"). Similarly, the words "include," "including," and "includes" mean "including, but not limited to."

### DETAILED DESCRIPTION

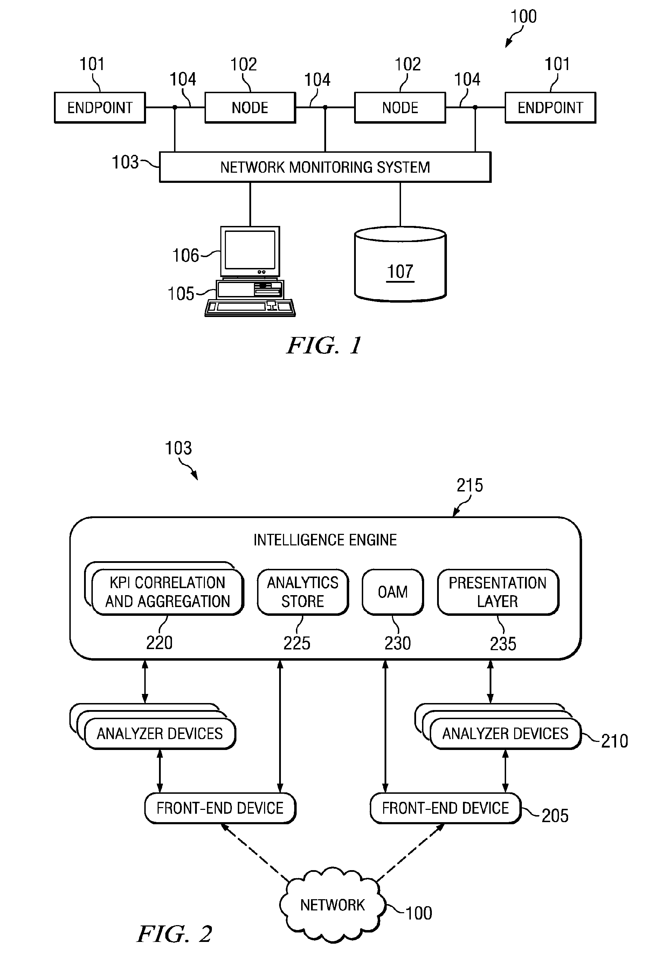

FIGURE 1 illustrates a block diagram of a network monitoring environment according to some embodiments. Particularly, telecommunications network 100 includes network nodes 102 and endpoints 101. For example, network 100 may include a wireless broadband network, a 3G network, a 4G network, a 3GPP Long Term Evolution (LTE) network, a voice-over-IP (VoIP) network, an IP Multimedia Subsystem (IMS) network, etc. Although only two nodes 102 and two endpoints 102 are shown in FIGURE 1, it will be understood that network 100 may comprise any number of nodes 102 and endpoints 101. Moreover, it will be understood that the nodes 102 and endpoints 101 in network 100 may be interconnected in any suitable manner, including being coupled to one or more other nodes 102 and/or endpoints 101.

In some implementations, endpoints 101 may represent, for example, computers, mobile devices, user equipment (UE), client applications, server applications, or the like. Meanwhile, nodes 102 may be components in an intranet, Internet, or public data network, such as a router or gateway. Nodes 102 may also be components in a 3G or 4G wireless network, such as a Serving GPRS Support Node (SGSN), Gateway GPRS Support Node (GGSN) or Border Gateway in a General Packet Radio Service (GPRS) network, Packet Data Serving Node (PDSN) in a CDMA2000 network, a Mobile Management Entity (MME) in a Long Term Evolution/Service Architecture Evolution (LTE/SAE) network or any other core network nodes or routers that transfer data packets or messages between endpoints 101.

Many packets traverse links 104 and nodes 102, as data is exchanged between endpoints 101. These packets may represent many different sessions and protocols. For example, if endpoint 101 is used for a voice or video call, then it may exchange Voice over Internet Protocol (VoIP) or Session Initiation Protocol (SIP) data packets with a SIP/VoIP server (*i.e.,* the other endpoint 101) using Real-Time Transport Protocol (RTP). If endpoint 101 is used to send or retrieve email, device 102 may exchange Internet Message Access Protocol (IMAP), Post Office Protocol 3 Protocol (POP3), or Simple Mail Transfer Protocol (SMTP) messages with an email server (*i.e.,* the other endpoint 101). If endpoint 101 is used to download or stream video, device 101 may use Real Time Streaming Protocol (RTSP) to establish and control media sessions with a video server (*i.e.,* the other endpoint 101). Alternatively, the user at endpoint 101 may access a number of websites using Hypertext Transfer Protocol (HTTP) to exchange data packets with a web server (*i.e.,* the other endpoint 101). It will be understood that packets exchanged between devices 101 may conform to numerous other protocols now known or later developed.

In a typical situation, approximately one percent of the packets traversing network 100 carry control data, such as information for setting-up, managing or tearing-down calls or sessions between endpoints 101. The other ninety-nine percent of the packets carry user data, such as actual voice, video, email or information content to and from devices 101.

Hierarchical network monitoring system 103 may be used to monitor the performance of network 100. Monitoring system 103 captures packets that are transported across links or interfaces 104 between nodes 102, endpoints 101, and/or any other network links or connections (not shown). In some embodiments, packet capture devices may be non-intrusively coupled to network links 104 to capture substantially all of the packets transmitted across the links. Although only three links 104 are shown in FIGURE 1, it will be understood that in an actual network there may be dozens or hundreds of physical, logical or virtual connections and links between network nodes. In some cases, network monitoring system 103 may be coupled to all or a high percentage of these links. In other embodiments, monitoring system 103 may be coupled only to a portion of network 100, such as only to links associated with a particular carrier or service provider. The packet capture devices may be part of network monitoring system 103, such as a line interface card, or may be separate components that are remotely coupled to network monitoring system 103 from different locations.

Monitoring system 103 may include one or more processors running one or more software applications that collect, correlate and/or analyze media and signaling data packets from network 100. Monitoring system 103 may incorporate protocol analyzer, session analyzer, and/or traffic analyzer functionality that provides OSI (Open Systems Interconnection) Layer 2 to Layer 7 troubleshooting by characterizing IP traffic by links, nodes, applications and servers on network 100. In some embodiments, these operations may be provided, for example, by the IRIS^{®} toolset available from Tektronix, Inc., although other suitable tools may exist or be later developed. The packet capture devices coupling network monitoring system 103 to links 104 may be high-speed, high-density 10GE probes that are optimized to handle high bandwidth IP traffic, such as the GEOPROBE^{®} G10, also available from Tektronix, Inc., although other suitable tools may exist or be later developed. A service provider or network operator may access data from monitoring system 103 via user interface station 105 having a display or graphical user interface 106, such as the IRISVIEW configurable software framework that provides a single, integrated platform for several applications, including feeds to customer experience management systems and operation support system (OSS) and business support system (BSS) applications, which is also available from Tektronix, Inc., although other suitable tools may exist or be later developed.

Monitoring system 103 may further comprise internal or external memory 107 for storing captured data packets, user session data, and configuration information. Monitoring system 103 may capture and correlate the packets associated specific data sessions on links 104. In some embodiments, related packets can be correlated and combined into a record for a particular flow, session or call on network 100. These data packets or messages may be captured in capture files. A call trace application may be used to categorize messages into calls and to create Call Detail Records (CDRs). These calls may belong to scenarios that are based on or defined by the underlying network. In an illustrative, non-limiting example, related packets can be correlated using a 5-tuple association mechanism. Such a 5-tuple association process may use an IP correlation key that includes 5 parts: server IP address, client IP address, source port, destination port, and Layer 4 Protocol (Transmission Control Protocol (TCP), User Datagram Protocol (UDP) or Stream Control Transmission Protocol (SCTP)).

Accordingly, hierarchical network monitoring system 103 may be configured to sample (*e.g.*, unobtrusively) related data packets for a communication session in order to track the same set of user experience information for each session and each client without regard to the protocol (*e.g.*, HTTP, RTMP, RTP, etc.) used to support the session. For example, monitoring system 103 may be capable of identifying certain information about each user's experience, as described in more detail below. A service provider may use this information, for instance, to adjust network services available to endpoints 101 such as the bandwidth assigned to each user, and the routing of data packets through network 100.

As the capability of network 100 increases toward 10GE and beyond (*e.g.*, 100GE), however, each link 104 supports more users' flows and sessions. In some embodiments, link 104 may be a 10GE or a collection of 10GE links (*e.g.*, one or more 100GE links) supporting thousands or tens of thousands of users or subscribers. Many of the subscribers may have multiple active sessions, which may result in an astronomical number of active flows on link 104 at any time where each flow includes many packets. With such a very large volume of packets, it becomes difficult for a service provider or network operator to analyze all the traffic across network 100, for example, to identify problem nodes or links.

To address these and other concerns, various systems and methods described herein may enable an intelligent and scalable network monitoring using a hierarchy of devices. Hence, FIGURE 2 illustrates hierarchical network monitoring system 103 according to some embodiments. As shown, one or more front-end monitoring devices or probes 205 (*i.e.,* a first tier of a three-tiered architecture) may be coupled to network 100. Each of front-end devices 205 may also be coupled to one or more network analyzer devices 210 (*i.e.,* a second tier), which in turn may be coupled to intelligence engine 215 (*i.e.,* a third tier). Front-end devices 205 may also be directly coupled to intelligence engine 215, as described in more detail below. Typically, front-end devices 205 may be capable or configured to process data at rates that are higher (*e.g.*, about 10 or 100 times) than analyzers 210. Although the system of FIGURE 2 is shown as a three-tier architecture, it should be understood by a person of ordinary skill in the art in light of this disclosure that the principles and techniques discussed herein may be extended to a larger number of tiers (*e.g.*, a four-tiered architecture).

Generally speaking, front-end devices 205 may passively tap into network 100 and monitor all or substantially of its data. For example, such one or more of front-end devices 205 may be coupled to one or more links 104 of network 100 shown in FIGURE 1. Meanwhile, analyzer devices 210 may receive and analyze a subset of the traffic that is of interest, as defined by one or more rules. Intelligence engine 215 may include a plurality of distributed components configured to perform further analysis and presentation of data to users. For example, intelligence engine may include Key Performance Indicator (KPI) correlation and aggregation module 220; analytics store 225; Operation, Administration, and Maintenance (OAM) module 230; and presentation layer 235.

In some embodiments, front-end devices 205 may be configured to monitor all of the network traffic that it is tapped into (*e.g.*, 10GE, 100GE, etc.). Front-end devices 205 may also be configured to intelligently distribute traffic based on a user session level. Additionally or alternatively, front-end devices 205 may distribute traffic based on a transport layer level. In some cases, each device 205 may analyze traffic intelligently to distinguish high-value traffic from low-value traffic based on a set of heuristics. Examples of such heuristics may include, but are not limited to, a customer list (*e.g.*, mobile subscriber identifiers (IMSI), phone numbers, etc.), traffic content, or a combination thereof. Therefore, in some implementations, front-end devices 205 may feed higher-valued traffic to a more sophisticated one of analyzers 210 and lower-valued traffic to a less sophisticated one of analyzers 210 (to provide at least some rudimentary information).

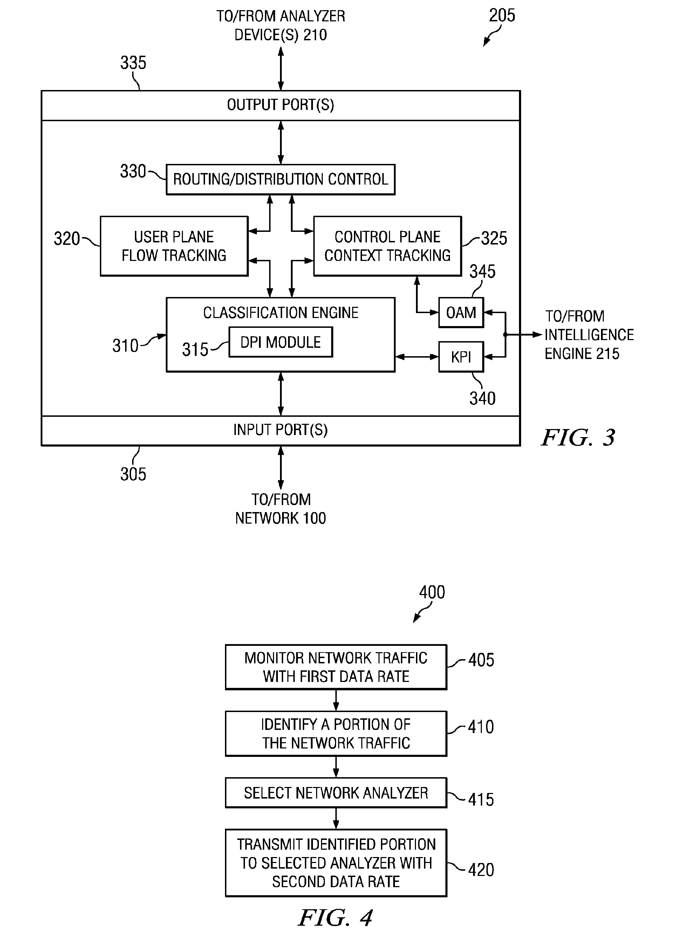

Front-end devices 205 may also be configured to aggregate data to enable backhauling, to generate netflows and basic KPI calculations, time stamping of data, port stamping of data, filtering out unwanted data, protocol classification, and deep packet inspection (DPI) analysis. In addition, front-end devices 205 may be configured to distribute data to the back-end monitoring tools (*e.g.*, analyzers 210 and/or intelligence engine 215) in a variety of ways, which may include flow based or user session based balancing. Devices 205 may also receive dynamic load information (*e.g.*, namely CPU and memory utilization) from each of analyzer devices 210 so to enable intelligent distribution of data. These, and other features, are described in more detail in connection with FIGURES 3-6 below.

Analyzer devices 210 may be configured to passively monitor a subset of the traffic that has been forwarded to it by the front-end device(s) 205. Analyzer devices 210 may also be configured to perform stateful analysis of data, extraction of key parameters for call correlation and generation of call data records (CDRs), application specific processing, computation of application specific KPIs, and communication with intelligence engine 215 for retrieval of KPIs (*e.g.*, in real-time and/or historical mode). In addition, analyzer devices 210 may be configured to notify front-end device(s) 205 regarding its CPU and/or memory utilization so that front-end device(s) 205 can utilize this information to intelligently distribute traffic.

Intelligence engine 215 may follow a distributed and scalable architecture. In some embodiments, module 220 may receive KPI and may correlate information from front-end and analyzer devices 205 and 210, respectively. OAM module 230 may be used to configure and/or control front-end device 205 and analyzer devices 210, distribute software or firmware upgrades, etc. Presentation layer 235 may be configured to present KPI and other relevant information to the end-users. Analytics store 225 may include a storage or database for the storage of analytics data or the like.

In some implementations, analyzer devices 210 and/or intelligence engine 215 may be hosted at an offsite location (*i.e.,* at a different physical location remote from front-end devices 205). Additionally or alternatively, analyzer devices 210 and/or intelligence engine 215 may be hosted in a cloud environment.

FIGURE 3 is a block diagram of front-end monitoring probe 205 according to some embodiments. Input port(s) 305 (*e.g.*, 8, 40, or 100 Gb/s) may be coupled to network 100 and to classification engine 310, which may include DPI module 315. Classification engine 310 may be coupled to user plane (UP) flow tracking module 320 and to control plane (CP) context tracking module 325, which may be coupled to routing/distribution control engine 330. Routing engine 330 may be coupled to output port(s), which in turn may be coupled to one or more analyzer devices 210. In some embodiments, KPI module 340 and OAM module 345 may also be coupled to classification engine 310 and/or tracking modules 320/325, as well as to intelligence engine 215.

As shown in FIGURE 3, front-end probe or device 205 may be configured to receive traffic from network 100 at a first data rate (*e.g.*, 10 Gb/s, 100 Gb/s, etc.), and to transmit selected portions of that traffic to one or more analyzers 210 at a second data rate (typically smaller than the first data rate). Classification engine 310 may identify user sessions, types of content, transport protocols, etc. (*e.g.*, using DPI module 315) and transfer UP packets to flow tracking module 320 and CP packets to context tracking module 325. In some implementations, classification engine 310 may implement one or more rules to allow it to distinguish high-value traffic from low-value traffic and to label processed packets accordingly. Routing/distribution control engine 330 may implement one or more load balancing or distribution operations, for example, to transfer high-value traffic to a first analyzer and low-value traffic to a second analyzer. Moreover, KPI module 340 may perform basic KPI operations to obtain metrics such as, for example, bandwidth statistics (*e.g.*, per port), physical frame/packet errors, protocol distribution, etc.

OAM module 345 of front-end device 205 may be coupled to OAM module 230 of intelligence engine 215 and may receive control and administration commands, such as, for example, rules that allow classification engine 310 to identify particular types of traffic. For example, based on these rules, classification engine 310 may be configured to identify and/or parse traffic by user session (*e.g.*, IMEI, IP address, phone number, etc.). In some cases, classification engine 310 may be session context aware (*e.g.*, web browsing, protocol specific, etc.). Further, front-end device 205 may be SCTP connection aware to ensure, for example, that all packets from a same connection are routed to the same one of analyzers 210.

In operation, front-end device 205 may be configured to perform selective monitoring operations-*i*.*e*., to identify and track only selected traffic (or types of traffic) such as, for example, high-value traffic. In those cases, only high-value traffic may be sent to analyzer(s) 210 (although all traffic may receive basic processing at the front-end device such as, for example, basic KPI metrics). Additionally or alternatively, front-end device 205 may be configured to target high-value traffic to a particular analyzer (or set of analyzers) 210, and to transmit low-value traffic to another analyzer (or set of analyzers) 210. This may allow, for instance, for more expensive analyzers to be used only (or mostly) for high-value traffic and inexpensive analyzers to be used for low-value traffic. Additionally or alternatively, front-end device 205 may perform load-balancing operations for all (or a selected portion) of the traffic among two or more analyzers 210. These and other operations are described with respect to FIGURES 4-6 below.

In various embodiments, blocks 305-345 may represent sets of software routines, logic functions, and/or data structures that are configured to perform specified operations. Although certain operations may be shown as distinct logical blocks, in some embodiments at least some of these operations may be combined into fewer blocks. Conversely, any given one of the blocks shown herein may be implemented such that its operations may be divided among two or more logical blocks. Moreover, although shown with a particular configuration, in other embodiments these various modules may be rearranged in other suitable ways.

FIGURE 4 is a flowchart of a method of routing network traffic. In some embodiments, method 400 may be performed, at least in part, by front-end network monitoring probe or device 205. At block 405, method 400 may include monitoring network traffic with a first data rate (*e.g.*, the network data rate or the data rate of traffic flowing through link 104 of network 100 in FIGURE 1). At block 410, method 400 may include identifying a portion of the network traffic. For example, classification engine 310 may identify the portion of the traffic belonging to a same user session. Additionally or alternatively, engine 310 may distinguish a high-value traffic portion and a low-value traffic portion as determined by one or more rules.

At block 415, method 400 may select a network analyzer device 210 to receive the identified traffic portion. For example, routing/distribution control engine 330 may select one of devices 210 based on a load balancing operation or the like. Engine 330 may receive load information from two or more of network analyzers 210, the load information indicating a central processing unit (CPU) usage and/or a memory usage. Engine 330 may then select an analyzer to receive the subset of network traffic based upon the load information. Additionally or alternatively, engine 300 may select one of analyzer devices 210 that is associated with the identified traffic (*e.g.*, high or low-value traffic). For instance, in some cases, selecting an analyzer may include matching the high-valued traffic portion to a first analyzer and matching the low-valued traffic portion to a second analyzer.

Then, at block 420, method 400 may transmit the identified portion of traffic to the selected analyzer with a second data rate different from the first data rate. In some implementations, the selected analyzer device 210 may not be configured to (or capable of) processing traffic with the first data rate, therefore the second data rate may be lower than the first data rate. Further, the total data rate of all the traffic received by each of analyzers 210 may also be smaller than the first data rate.

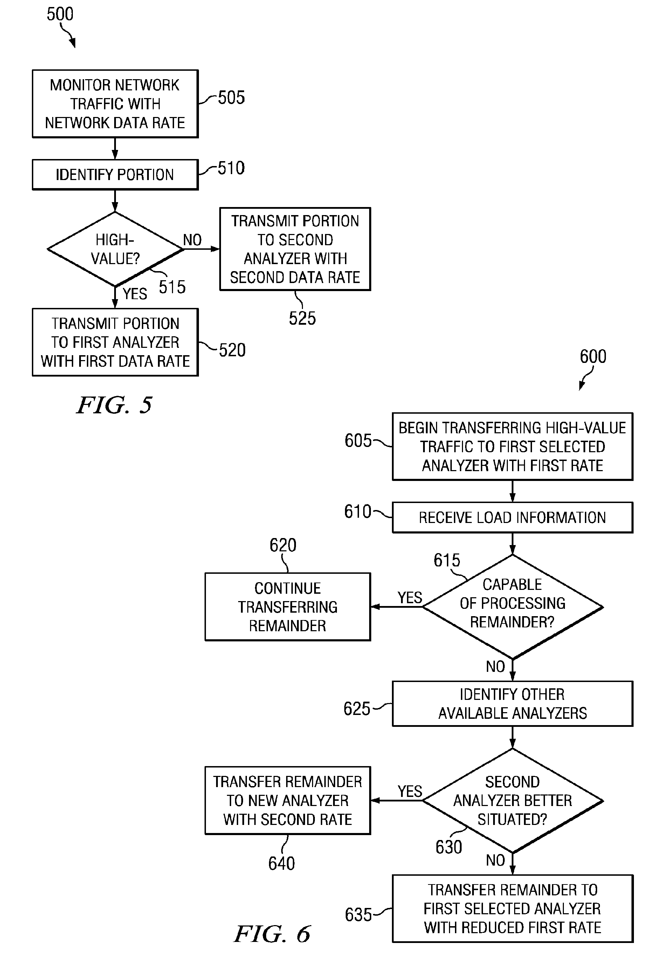

FIGURE 5 is a flowchart of a method of routing high- and low-value network traffic. In some embodiments, method 500 may be performed, at least in part, by front-end network monitoring probe or device 205. At block 505, method 500 may include monitoring network traffic at a network data rate. At block 510, method 500 may identify a portion of the network traffic. At block 515, method 500 may determine whether the identified portion high-value traffic, for example, as determined by one or more traffic identification rules. If so, at block 520, method 500 may transmit the identified portion to a first analyzer with a first data rate. Otherwise, the identified portion may be characterized as low-value and transmitted to a second analyzer with a second data rate at block 525. In some implementations, the second data rate may be larger than the first data rate (*e.g.*, the analyzer(s) assigned to high-value traffic may be capable of processing higher rate traffic than the analyzer(s) assigned to low-value traffic). In other implementations, however, the second data rate may be smaller than the first data rate (*e.g.*, the analyzer(s) assigned to low-value traffic may be capable of processing higher rate traffic than the analyzer(s) assigned to high-value traffic). As such, a hierarchical network monitoring system may be built and/or operated with more flexibility.

FIGURE 6 is a flowchart of a method of intelligent load balancing. Again, in some embodiments, method 600 may be performed, at least in part, by front-end network monitoring probe or device 205. At block 605, method 600 may begin transferring or transmitting high-value traffic to a first analyzer with a first data rate. At block 610, method 600 may include receiving load information (*e.g.*, CPU and/or memory usage) from one or more analyzers 210. Then, at block 615, method 600 may determine whether the first analyzer is capable of processing the remainder (or an additional portion) of the high-value traffic. (For example, the additional portion of the high-value traffic may include traffic associated with a different user session because, typically, a single analyzer processes an entire user session.) If so, front-end probe 205 may continue processing the traffic at block 620.

Otherwise, at block 625, method 600 may identify other available analyzers, for example, based on their respective load information. At block 630, method 600 may determine whether a second analyzer is better situated (*e.g.*, it is being more lightly used) than the first analyzer to process the additional traffic portion. If so, then the additional portion of the high-value traffic may be transferred to the second analyzer at a second data rate at block 640. Otherwise, that portion may be transferred to the first analyzer with a reduced first rate at block 635. In some cases, the additional portion may be split into smaller parts and transferred to different analyzers depending upon load conditions, and each part may be transmitted with a different data rate.

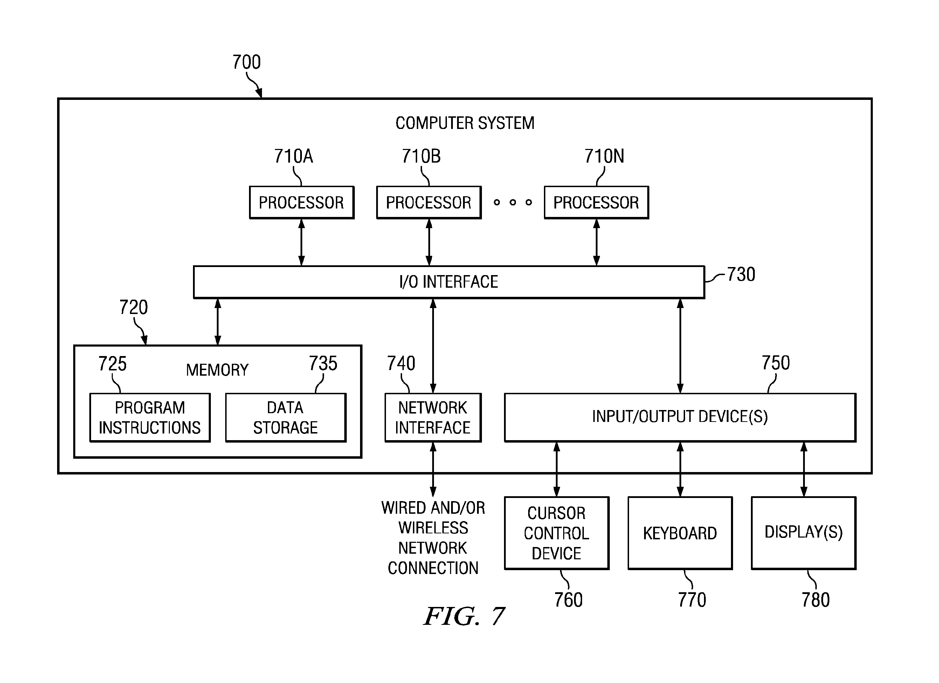

Aspects of network monitoring system 100 may be implemented or executed by one or more computer systems. One such computer system is illustrated in FIGURE 7. In various embodiments, computer system 700 may be a server, a mainframe computer system, a workstation, a network computer, a desktop computer, a laptop, or the like. For example, in some cases, front-end monitoring probe 205 shown in FIGURE 2 may be implemented as computer system 700. Moreover, one or more of analyzer devices 210 and/or intelligence engine may include one or more computers in the form of computer system 700. As explained above, in different embodiments these various computer systems may be configured to communicate with each other in any suitable way, such as, for example, via network 100.

As illustrated, computer system 700 includes one or more processors 710 coupled to a system memory 720 via an input/output (I/O) interface 730. Computer system 700 further includes a network interface 740 coupled to I/O interface 730, and one or more input/output devices 750, such as cursor control device 760, keyboard 770, and display(s) 780. In some embodiments, a given entity (*e.g.*, network monitoring system 110) may be implemented using a single instance of computer system 700, while in other embodiments multiple such systems, or multiple nodes making up computer system 700, may be configured to host different portions or instances of embodiments. For example, in an embodiment some elements may be implemented via one or more nodes of computer system 700 that are distinct from those nodes implementing other elements (*e.g.*, a first computer system may implement classification engine 310 while another computer system may implement routing/distribution control module 330).

In various embodiments, computer system 700 may be a single-processor system including one processor 710, or a multi-processor system including two or more processors 710 (*e.g.*, two, four, eight, or another suitable number). Processors 710 may be any processor capable of executing program instructions. For example, in various embodiments, processors 710 may be general-purpose or embedded processors implementing any of a variety of instruction set architectures (ISAs), such as the x86, POWERPC^{®}, ARM^{®}, SPARC^{®}, or MIPS^{®} ISAs, or any other suitable ISA. In multi-processor systems, each of processors 710 may commonly, but not necessarily, implement the same ISA. Also, in some embodiments, at least one processor 710 may be a graphics processing unit (GPU) or other dedicated graphics-rendering device.

System memory 720 may be configured to store program instructions and/or data accessible by processor 710. In various embodiments, system memory 720 may be implemented using any suitable memory technology, such as static random access memory (SRAM), synchronous dynamic RAM (SDRAM), nonvolatile/Flash-type memory, or any other type of memory. As illustrated, program instructions and data implementing certain operations, such as, for example, those described herein, may be stored within system memory 720 as program instructions 725 and data storage 735, respectively. In other embodiments, program instructions and/or data may be received, sent or stored upon different types of computer-accessible media or on similar media separate from system memory 720 or computer system 700. Generally speaking, a computer-accessible medium may include any tangible storage media or memory media such as magnetic or optical media-*e.g.*, disk or CD/DVD-ROM coupled to computer system 700 via I/O interface 730. Program instructions and data stored on a tangible computer-accessible medium in non-transitory form may further be transmitted by transmission media or signals such as electrical, electromagnetic, or digital signals, which may be conveyed via a communication medium such as a network and/or a wireless link, such as may be implemented via network interface 740.

In an embodiment, I/O interface 730 may be configured to coordinate I/O traffic between processor 710, system memory 720, and any peripheral devices in the device, including network interface 740 or other peripheral interfaces, such as input/output devices 750. In some embodiments, I/O interface 730 may perform any necessary protocol, timing or other data transformations to convert data signals from one component (*e.g.*, system memory 720) into a format suitable for use by another component (*e.g.*, processor 710). In some embodiments, I/O interface 730 may include support for devices attached through various types of peripheral buses, such as a variant of the Peripheral Component Interconnect (PCI) bus standard or the Universal Serial Bus (USB) standard, for example. In some embodiments, the function of I/O interface 730 may be split into two or more separate components, such as a north bridge and a south bridge, for example. In addition, in some embodiments some or all of the functionality of I/O interface 730, such as an interface to system memory 720, may be incorporated directly into processor 710.

Network interface 740 may be configured to allow data to be exchanged between computer system 700 and other devices attached to network 115, such as other computer systems, or between nodes of computer system 700. In various embodiments, network interface 740 may support communication via wired or wireless general data networks, such as any suitable type of Ethernet network, for example; via telecommunications/telephony networks such as analog voice networks or digital fiber communications networks; via storage area networks such as Fiber Channel SANs, or via any other suitable type of network and/or protocol.

Input/output devices 750 may, in some embodiments, include one or more display terminals, keyboards, keypads, touch screens, scanning devices, voice or optical recognition devices, or any other devices suitable for entering or retrieving data by one or more computer system 700. Multiple input/output devices 750 may be present in computer system 700 or may be distributed on various nodes of computer system 700. In some embodiments, similar input/output devices may be separate from computer system 700 and may interact with one or more nodes of computer system 700 through a wired or wireless connection, such as over network interface 740.

As shown in FIGURE 7, memory 720 may include program instructions 725, configured to implement certain embodiments described herein, and data storage 735, comprising various data accessible by program instructions 725. In an embodiment, program instructions 725 may include software elements of embodiments illustrated in FIGURE 2. For example, program instructions 725 may be implemented in various embodiments using any desired programming language, scripting language, or combination of programming languages and/or scripting languages (*e.g.,* C, C++, C#, JAVA^{®}, JAVASCRIPT^{®}, PERL^{®}, etc.). Data storage 735 may include data that may be used in these embodiments. In other embodiments, other or different software elements and data may be included.

A person of ordinary skill in the art will appreciate that computer system 700 is merely illustrative and is not intended to limit the scope of the disclosure described herein. In particular, the computer system and devices may include any combination of hardware or software that can perform the indicated operations. In addition, the operations performed by the illustrated components may, in some embodiments, be performed by fewer components or distributed across additional components. Similarly, in other embodiments, the operations of some of the illustrated components may not be performed and/or other additional operations may be available. Accordingly, systems and methods described herein may be implemented or executed with other computer system configurations.

In various embodiments, the systems and methods described herein may provide flexibility in monitoring both low and high data rate networks by intelligently delineating high valued traffic from lower value traffic. Front-end devices may also perform certain critical functions such as, for example, time stamping and port stamping of data, which may then be used by downstream applications so as not to lose visibility into the network. This is in contrast with conventional systems, where each individual probe is typically responsible for these operations. Using some of techniques described herein, however, analyzer devices may be capable of offloading such work to front-end probes. As such, customers may derive more value out of high-value traffic and better monetization of traffic, while reducing capital expenditures. Also, vendors need not monitor 100% of the traffic to provide value to customers, and can provide cheaper and affordable solutions as bandwidth continues to grow exponentially.

The various techniques described herein may be implemented in software, hardware, or a combination thereof. The order in which each operation of a given method is performed may be changed, and various elements of the systems illustrated herein may be added, reordered, combined, omitted, modified, etc. It will be understood that various operations discussed herein may be executed simultaneously and/or sequentially. It will be further understood that each operation may be performed in any order and may be performed once or repetitiously. Various modifications and changes may be made as would be clear to a person of ordinary skill in the art having the benefit of this specification. It is intended that the invention(s) described herein embrace all such modifications and changes and, accordingly, the above description should be regarded in an illustrative rather than a restrictive sense.

## Claims

1. A method, comprising:
performing, by a front-end network monitoring probe,
monitoring network traffic, the network traffic having a first data rate; identifying a portion of the network traffic;
selecting one of a plurality of network analyzers; and
transmitting the identified portion of network traffic to the selected one of the plurality of network analyzers with a second data rate smaller than the first data rate, wherein the selected one of the plurality of network analyzers is not capable of analyzing traffic at the first data rate.

2. The method of claim 1, wherein monitoring the network traffic includes monitoring packet-based traffic in a mobile telecommunications network.

3. The method of claim 1, wherein identifying the portion of the network traffic includes identifying a high-value traffic portion and a low-value traffic portion as determined by one or more traffic identification rules.

4. The method of claim 3, wherein the one or more traffic identification rules identify a user.

5. The method of claim 3, wherein the one or more traffic identification rules identify a user session.

6. The method of claim 3, wherein the one or more traffic identification rules identify a transport protocol.

7. The method of claim 3, wherein the one or more traffic identification rules identify a type of content.

8. The method of claim 3, wherein selecting the one of the plurality of network analyzers includes matching the high-valued traffic portion to a first selected one of the plurality of network analyzers and matching the low-valued traffic portion to a second selected one of the plurality of network analyzers.

9. The method of claim 1, wherein selecting the one of the plurality of network analyzers includes executing a load balancing operation among two or more of the plurality of network analyzers.

10. The method of claim 9, wherein executing the load balancing operation further comprises:
performing, by the front-end network monitoring probe,
receiving load information from two or more of the plurality of network analyzers, the load information indicating at least one of: a central processing unit (CPU) usage or a memory usage; and
selecting the one of the plurality of network analyzers to receive the subset of network traffic based, at least in part, upon the load information.

11. The method of claim 1, wherein the first data rate is between 2 and 10 times greater than the second data rate.

12. The method of claim 1, wherein the first data rate is between 10 and 100 times greater than the second data rate.

13. A front-end network monitoring probe, comprising:
a processor; and
a memory coupled to the processor, the memory configured to store program instructions executable by the processor to cause the front-end network monitoring probe to:
monitor network traffic in a telecommunications network, the traffic being communicated between two nodes at a network data rate;
identify, among the network traffic, high-value traffic as determined by one or more traffic identification rules;
transmit the high-value traffic to a first of a plurality of network analyzers with a first data rate smaller than the network data rate;
identify, among the network traffic, low-value traffic as determined by the one or more traffic identification rules; and
transmit the low-value traffic to a second one of a plurality of network analyzers with a second data rate smaller than the network data rate and different from the first data rate.

14. The front-end network monitoring probe of claim 13, wherein the second data rate is larger than the first data rate.

15. The front-end network monitoring probe of claim 13, wherein the second data rate is smaller than the first data rate.

16. The front-end network monitoring probe of claim 13, the program instructions further executable by the processor to cause the front-end network monitoring probe to:
receive load information from the first of the plurality of network analyzers; and
configure the first data rate based, at least in part, upon the load information.

17. The front-end network monitoring probe of claim 13, the program instructions further executable by the processor to cause the front-end network monitoring probe to:
receive load information from the plurality of network analyzers;
determine, based on the load information, that the first of the plurality of network analyzers is not capable of processing a portion of the high-value traffic with the first data rate; and
select, based on the load information, between: (a) transmitting the portion of the high-value traffic to another of the plurality of network analyzers with the first data rate, or (b) transmitting the portion of the high-value traffic to the first of the plurality of network analyzers with a reduced first data rate.

18. A tangible computer-readable storage medium having program instructions stored thereon that, upon execution by a processor within a front-end network monitoring probe, cause the front-end network monitoring probe to:
monitor, at a first data rate, packet-based traffic communicated between nodes of a wireless telecommunications network with the first data rate;
identify a high-value portion of the packet-based traffic based, at least in part, upon user identification information present in the packet-based traffic; and
transmit the high-value portion of the packet-based traffic to a first selected one of the plurality of network analyzers with a second data rate smaller than the first data rate, the first selected one of the plurality of network analyzers not configured to operate at the first data rate.

19. The tangible computer-readable storage medium of claim 18, wherein the program instructions, upon execution by the processor, further cause the front-end network monitoring probe to:
identify a low-value portion of the packet-based traffic based, at least in part, upon user identification information present in the packet-based traffic; and
transmit the low-value portion of the packet-based traffic to a second selected one of the plurality of network analyzers with a third data rate smaller than the first data rate and different from the second data rate, the second selected one of the plurality of network analyzers not configured to operate at the first data rate.

20. The tangible computer-readable storage medium of claim 18, wherein the program instructions, upon execution by the processor, further cause the front-end network monitoring probe to:
determine that the first of the plurality of network analyzers is not capable of processing the high-value portion of the packet-based traffic with the first data rate;
transmit a first part of the high-value portion of the packet-based traffic to a third one of the plurality of network analyzers with a third data rate; and
transmit a second part of the high-value portion of the packet-based traffic to the first of the plurality of network analyzers with a reduced first data rate.
